# EUROPÄISCHE PATENTSCHRIFT

(11) **EP 3 056 452 B1**
(45) Veröffentlichungstag und Bekanntmachung des Hinweises auf die Patenterteilung: **30.08.2017**
(21) Anmeldenummer: 16152104.2
(22) Anmeldetag: 20.01.2016
(51) Int. Cl.: B65F 1/06, B65F 1/14, B65F 1/16

(54) **ABFALLSAMMLER**
WASTE COLLECTOR
COLLECTEUR DE DECHETS

(30) Priorität: 11.02.2015 DE 202015100670 U
(43) Veröffentlichungstag der Anmeldung: 17.08.2016
(73) Patentinhaber: Hailo-Werk Rudolf Loh GmbH & Co. KG, 35708 Haiger (DE)
(72) Erfinder: Fatrai, Alexander, 35216 Biedenkopf (DE); Phetkhajee, Kasem, 575208 Freudenberg (DE)
(74) Vertreter: Manske, Jörg

(56) Entgegenhaltungen:
- DE-U1-202014 102 080
- JP-A- H0 776 402
- JP-A- 2010 042 874
- US-A1- 2014 291 328

## Beschreibung

Die vorliegende Erfindung betrifft einen Abfallsammler, umfassend ein Gehäuse mit einem Innenraum zur Aufnahme mindestens eines Abfallsacks oder mindestens eines Inneneimers sowie einen Gehäusedeckel, der fest oder lösbar an einer Oberseite des Gehäuses angebracht ist und eine Aufnahmeöffnung aufweist, in der ein Einsatz mit mindestens einer Einwurföffnung angeordnet ist, wobei an einer Innenseite des Gehäusedeckels und an einer Innenseite des Einsatzes Befestigungsmittel angebracht sind, die für eine lösbare Befestigung des Einsatzes an dem Gehäusedeckel eingerichtet sind.

Abfallsammler der eingangs genannten Art sind aus dem Stand der Technik in unterschiedlichen Ausführungsformen bekannt. Diese haben den Nachteil, dass zum Einbringen des Abfalls in den im Innenraum des Gehäuses des Abfallsammlers angeordneten Abfallsacks oder Inneneimers der Gehäusedeckel geöffnet beziehungsweise bei einigen Ausführungsvarianten sogar vollständig entfernt werden muss.

Ein gattungsgemäßer Abfallsammler ist aus der DE 20 2014 102 080 U1 bekannt. Durch das Vorsehen eines Einsatzes mit mindestens einer Einwurföffnung, der in einer damit korrespondierenden und passend geformten Aufnahmeöffnung des Gehäusedeckels angebracht ist, wird in vorteilhafter Weise eine einfachere Handhabung erreicht. Es ist nicht mehr erforderlich, den Gehäusedeckel zum Einbringen des Abfalls in den im Innenraum angeordneten Abfallsack beziehungsweise Inneneimer zumindest teilweise zu öffnen beziehungsweise vollständig von dem Gehäuse zu entfernen.

Die vorliegende Erfindung macht es sich zur Aufgabe, einen Abfallsammler der eingangs genannten Art zur Verfügung zu stellen, der eine einfache Handhabung bei der Montage beziehungsweise Demontage des Einsatzes ermöglicht.

Die Lösung dieser Aufgabe liefert ein gattungsgemäßer Abfallsammler mit den Merkmalen des kennzeichnenden Teils des Anspruchs 1. Die Unteransprüche betreffen vorteilhafte Weiterbildungen der Erfindung. Ein erfindungsgemäßer Abfallsammler zeichnet sich dadurch aus, dass die Befestigungsmittel als Klettbefestigungsmittel ausgebildet sind. Klettbefestigungsmittel zeichnen sich insbesondere durch eine einfache Handhabung bei der Montage beziehungsweise Demontage des Einsatzes aus. Das Befestigen beziehungsweise Lösen des Einsatzes kann dabei intuitiv und mit wenigen Handgriffen erfolgen. Die lösbare Befestigung mit Hilfe der Klettbefestigungsmittel bewirkt einen sicheren Halt des Einsatzes in der Aufnahmeöffnung des Gehäusedeckels und ermöglicht einen einfachen Austausch des Einsatzes durch einen anderen Einsatz. Darüber hinaus kann auch die Herstellung des Abfallsammlers vereinfacht werden. Das Gehäuse des Abfallsammlers mit dem daran angebrachten Gehäusedeckel und gegebenenfalls weiteren Gehäusekomponenten kann als vorgefertigte Einheit beim Hersteller vorgehalten werden und dann - den Kundenwünschen entsprechend - bei der Montage mit einem passenden Einsatz bestückt werden. Da die Klettbefestigungsmittel an der Innenseite des Gehäusedeckels und an der Innenseite des Einsatzes angebracht sind, wird in vorteilhafter Weise erreicht, dass die Klettbefestigungsmittel von außen für einen Betrachter nicht sichtbar sind.

In einer bevorzugten Ausführungsform besteht die Möglichkeit, dass der Einsatz so geformt ist, dass er mit einem äußeren Rand auf einem an die Aufnahmeöffnung angrenzenden Bereich des Gehäusedeckels aufliegt. Dadurch kann zumindest eine Vorfixierung des in der Aufnahmeöffnung angeordneten Einsatzes erreicht werden.

In einer bevorzugten Ausführungsform wird vorgeschlagen, dass die Einwurföffnung kreisrund ausgebildet ist. Der mit einem Einsatz, der eine kreisrunde Einwurföffnung aufweist, versehene Abfallsammler eignet sich zum Beispiel für die Sammlung von Verpackungen, die wiederverwertbare Wertstoffe aus Metall oder Kunststoff oder auch Glas enthalten. Diese Verpackungen sind häufig zumindest abschnittsweise zylindrisch geformt, so dass das Einbringen in den Innenraum des Abfallsammlers durch die kreisrunde Einwurföffnung besonders einfach und intuitiv erfolgen kann.

Um das Einbringen des Abfalls weiter zu vereinfachen, kann in einer besonders bevorzugten Ausführungsform vorgesehen sein, dass der Einsatz eine sich nach innen verjüngende, kegelstumpfartig geformte Vertiefung aufweist, welche die kreisrunde Einwurföffnung seitlich begrenzt.

In einer alternativen Ausführungsform besteht die Möglichkeit, dass die Einwurföffnung schlitz- oder langlochartig ausgebildet ist. Ein Abfallsammler mit einem Einsatz, der eine schlitz- oder langlochartige Einwurföffnung aufweist, eignet sich zum Beispiel für die Aufnahme von Wertstoffen aus Papier oder Pappe, die häufig in einer länglich schmalen Form (zum Beispiel als zusammengefaltete Zeitung oder Zeitschrift oder als gefalteter Karton) vorliegen. Die schlitz- oder langlochartige Form der Einwurföffnung korrespondiert somit mit der Form, in der Wertstoffe aus Papier oder Pappe bei ihrer Entsorgung häufig vorliegen.

Vorzugsweise kann der Gehäusedeckel schwenkbar an dem Gehäuse angelenkt sein. Dadurch wird erreicht, dass Abfälle, die aufgrund ihrer Größe nicht durch die Einwurföffnung hindurch passen, trotzdem in den Innenraum des Abfallsammlers und den darin untergebrachten Abfallsack beziehungsweise Inneneimer eingebracht werden können. Durch das Verschwenken des Gehäusedeckels wird die effektiv zur Verfügung stehende Einwurföffnung des Abfallsammlers vergrößert und ermöglicht somit das Einbringen größerer Gegenstände in den Innenraum des Gehäuses.

Vorzugsweise kann der Abfallsammler eine Gehäusetür aufweisen, die lösbar mit dem Gehäuse verbunden ist. Durch das Entfernen der Gehäusetür, die insbesondere durch eine Bewegung derselben in Hochrichtung des Gehäuses erfolgen kann, wird die Möglichkeit geschaffen, dass der im Innenraum des Gehäuses angeordnete Abfallsack beziehungsweise Inneneimer von außen zugänglich ist und im Bedarfsfall entnommen und entsorgt beziehungsweise entnommen und entleert werden kann. In einer alternativen Ausführungsform besteht auch die Möglichkeit, dass der Abfallsammler eine Gehäusetür aufweist, die an dem Gehäuse, vorzugsweise an einer Vorderseite des Gehäuses, angelenkt ist. Durch ein Verschwenken der Gehäusetür in eine geöffnete Stellung wird der Innenraum des Gehäuses von außen zugänglich.

Um einen sicheren Halt des Abfallsacks im Innenraum des Gehäuses zu erreichen, wird in einer besonders bevorzugten Ausführungsform vorgeschlagen, dass im Innenraum des Gehäuses Mittel zum Halten und Aufspannen des mindestens einen Abfallsacks ausgebildet sind. Diese Mittel können bei entfernter beziehungsweise geöffneter Gehäusetür vorzugsweise nach außen verschwenkbar ausgebildet sein, um auf diese Weise das Anbringen beziehungsweise Entnehmen des Abfallsacks zu vereinfachen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

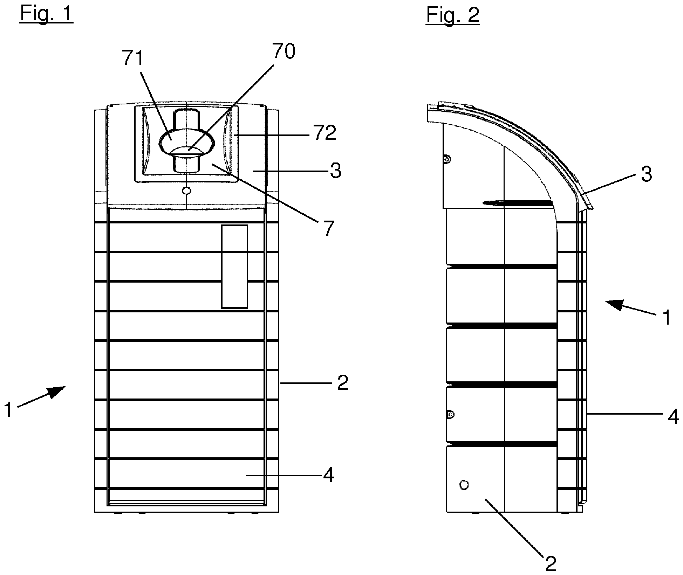

- Fig. 1: eine Vorderansicht eines Abfallsammlers, der gemäß einem bevorzugten Ausführungsbeispiel der vorliegenden Erfindung ausgeführt ist,
- Fig. 2: eine Seitenansicht des Abfallsammlers gemäß Fig. 1,
- Fig. 3: eine Draufsicht auf den Abfallsammler gemäß Fig. 1,

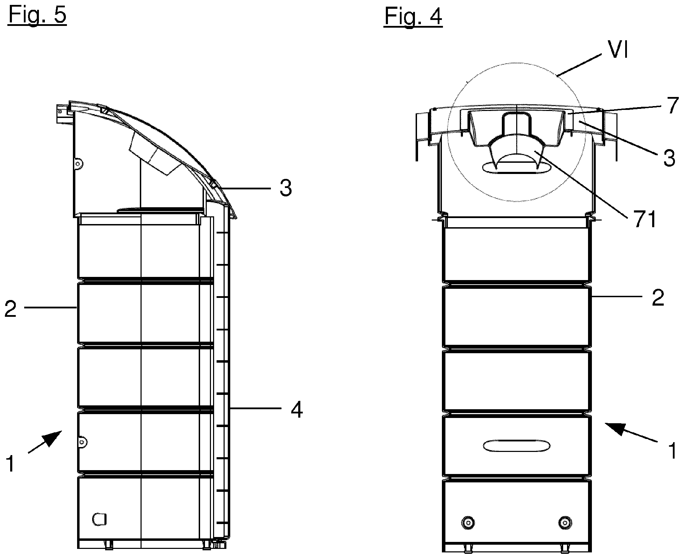

- Fig. 4: einen Schnitt durch den Abfallsammler entlang einer Linie B-B in Fig. 3,
- Fig. 5: einen Schnitt durch den Abfallsammler entlang einer Linie C-C in Fig. 3,
- Fig. 6: eine vergrößerte Darstellung einer Einzelheit VI gemäß Fig. 4.

Ein Abfallsammler 1, der gemäß einem bevorzugten Ausführungsbeispiel der vorliegenden Erfindung ausgeführt ist, umfasst ein Gehäuse 2, an dessen Oberseite ein Gehäusedeckel 3 angebracht ist. An einer Vorderseite des Gehäuses 2 ist eine Gehäusetür 4 lösbar angebracht, so dass ein Innenraum des Gehäuses 2 nach dem Entfernen der Gehäusetür 4 von außen zugänglich ist. Zum Entfernen kann die Gehäusetür 4 insbesondere in Hochrichtung geschoben werden. Alternativ kann die Gehäusetür 4 an dem Gehäuse 2 angelenkt sein, so dass sie um eine sich in Hochrichtung erstreckende Achse in eine Öffnungsstellung verschwenkt werden kann, in der der Innenraum des Gehäuses 2 zugänglich ist. Im Innenraum des Gehäuses 2 können Haltemittel zur lösbaren Halterung und zum Aufspannen eines Abfallsacks vorgesehen sein. Vorzugsweise können diese Mittel bei entfernter beziehungsweise geöffneter Gehäusetür 4 nach außen verschwenkbar ausgebildet sein, um auf diese Weise das Anbringen beziehungsweise Entnehmen des Abfallsacks zu vereinfachen. Wahlweise kann im Innenraum des Gehäuses 2 auch ein Inneneimer zur Abfallaufnahme untergebracht sein. Nach dem Entfernen beziehungsweise Öffnen der Gehäusetür 4 kann der Abfallsack entnommen und ausgetauscht werden beziehungsweise der im Innenraum untergebrachte Inneneimer entnommen, entleert und anschließend wieder im Innenraum des Gehäuses 2 platziert werden.

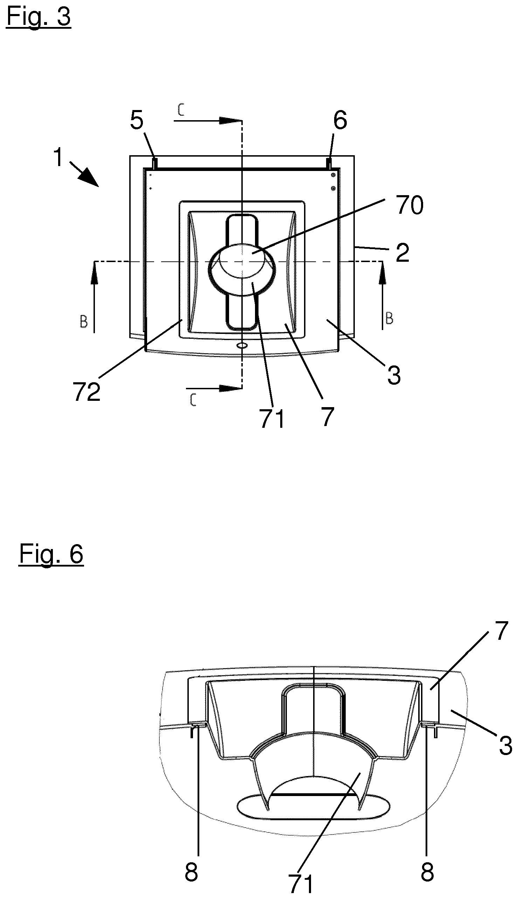

Der Gehäusedeckel 3 ist in dem hier gezeigten Ausführungsbeispiel gekrümmt geformt und an der Oberseite des Gehäuses 2 mit Hilfe zweier Scharniergelenkmittel 5, 6, die insbesondere in Fig. 3 zu erkennen sind, angelenkt. Wie in Fig. 3 darüber hinaus zu erkennen, erstreckt sich der Gehäusedeckel 3 mit einem vorderen Ende abschnittsweise über die Vorderseite des Gehäuses 2 mit der Tür 4 hinweg. Dieses vordere Ende des Gehäusedeckels 3 bildet einen Griffabschnitt, um das Verschwenken des Gehäusedeckels 3 zu vereinfachen.

Durch ein Verschwenken des Gehäusedeckels 3 kann eine Einwurföffnung an der Oberseite des Gehäuses 2 freigegeben beziehungsweise wieder geschlossen werden. Das Gehäuse 2, der Gehäusedeckel 3 und die Gehäusetür 4 sind vorzugsweise aus einem schlagzähen Kunststoffmaterial, insbesondere aus AcrylnitrilButadien-Styrol (ABS) hergestellt.

Um zu vermeiden, dass zum Einbringen des Abfalls in den im Innenraum des Gehäuses 2 angeordneten Abfallsack beziehungsweise Inneneimer stets der Gehäusedeckel 3 in eine zumindest teilweise geöffnete Stellung verschwenkt werden muss, weist der Gehäusedeckel 3 einen Einsatz 7 auf, der eine im Wesentlichen rechteckige Umrissform besitzt und eine Einwurföffnung 70 umfasst. Der Gehäusedeckel 3 weist eine Aufnahmeöffnung auf, die im Wesentlichen rechteckig geformt ist. In diese Aufnahmeöffnung kann der Einsatz 7 eingesetzt werden. Ein äußerer Rand 72 des Einsatzes 7 liegt dabei auf einem an die Aufnahmeöffnung angrenzenden Bereich des Gehäusedeckels 3 auf, so dass er nicht nach innen in den Innenraum des Gehäuses 2 fallen kann. An dem Gehäusedeckel 3 und an dem Einsatz 7 sind Befestigungsmittel angebracht, die dazu eingerichtet sind, den Einsatz 7 lösbar an dem Gehäusedeckel 3 zu befestigen. Die Befestigungsmittel sind für eine lösbare Befestigung des Einsatzes 7 an dem Gehäusedeckel 3 eingerichtet und als Klettbefestigungsmittel ausgebildet. Mit Hilfe der Klettbefestigungsmittel 8 kann der Einsatz 7 mit wenigen Handgriffen lösbar an dem Gehäusedeckel 3 befestigt werden. Ebenso einfach kann die Klettverbindung wieder gelöst werden, um den Einsatz 70 entnehmen und gegebenenfalls austauschen zu können. Da die Klettbefestigungsmittel 8 innen an dem Gehäusedeckel 3 und an dem Einsatz 7 angebracht sind, sind diese von außen für einen Betrachter nicht sichtbar und wirken sich damit nicht störend auf das optische Erscheinungsbild des Abfallsammlers 1 aus.

Durch die Einwurföffnung 70 des Einsatzes 7 kann Abfall in den Innenraum des Gehäuses 2 eingebracht werden und innerhalb des darin untergebrachten Abfallsacks beziehungsweise Inneneimers gesammelt werden. Der Einsatz 7 weist in diesem Ausführungsbeispiel eine sich nach innen verjüngende, kegelstumpfartig geformte Vertiefung 71 auf, welche die vorliegend kreisrund ausgebildete Einwurföffnung 70 seitlich begrenzt. Die sich nach innen verjüngende Vertiefung 71 erleichtert in vorteilhafter Weise das Einbringen des Abfalls in den Innenraum des Abfallsammlers 1.

Der hier gezeigte Abfallsammler 1 eignet sich insbesondere für die Sammlung von Verpackungen, die wiederverwertbare Wertstoffe aus Metall oder Kunststoff enthalten. Diese Verpackungen sind häufig zumindest abschnittsweise zylindrisch geformt, so dass das Einbringen in den Innenraum des Abfallsammlers 1 durch die kreisrunde Einwurföffnung 70 des Einsatzes 7 besonders einfach und intuitiv erfolgen kann. Um Benutzern visuell zu signalisieren, dass der Abfallsammler 1 für die Aufnahme wiederverwertbarer Wertstoffe aus Metall oder Kunststoff vorgesehen ist, kann der Einsatz 7 vorzugsweise gelb gefärbt sein. Aufgrund der kreisrunden Formgestaltung der Einwurföffnung 70 des Einsatzes 7 eignet sich der Abfallsammler 1 in vorteilhafter Weise auch für die Aufnahme von Wertstoffen aus Glas, die häufig zumindest abschnittsweise einen im Wesentlichen kreisrunden Umriss aufweisen.

Gemäß einer alternativen Ausführungsform, die hier nicht explizit dargestellt ist, kann der Einsatz 7 zumindest eine schlitz- oder langlochartig geformte Einwurföffnung 70 umfassen. Die rechteckige Außenform des Einsatzes 7 entspricht derjenigen des ersten Ausführungsbeispiels, so dass dieser passend in die Aufnahmeöffnung des Gehäusedeckels 3 eingesetzt werden kann. Ein mit einem derartig ausgebildeten Einsatz 7 ausgestatteter Abfallsammler 1 eignet sich insbesondere für die Aufnahme von Wertstoffen aus Papier oder Pappe, die häufig in einer länglich schmalen Form (zum Beispiel als gefaltete Zeitung oder Zeitschrift oder als gefalteter Karton) vorliegen. Die schlitz- oder langlochartige Form der Einwurföffnung 70 korrespondiert somit mit der Form, in der Wertstoffe aus Papier oder Pappe bei der Entsorgung häufig vorliegen.

Um Benutzern visuell zu signalisieren, dass der Abfallsammler 1 mit der schlitz- oder langlochartigen Form der Einwurföffnung 70 für die Aufnahme von Abfall aus Papier oder Pappe vorgesehen ist, kann der Einsatz 7 vorzugsweise blau gefärbt sein.

Dadurch dass der Einsatz 7 mittels der Klettbefestigungsmittel 8 lösbar mit dem Gehäusedeckel 3 verbindbar ist, kann die Herstellung des Abfallsammlers 1 ebenfalls vereinfacht werden. Das Gehäuse 2 mit der Gehäusetür 4 und dem Gehäusedeckel 3 kann als vormontierte Einheit vorgehalten werden, so dass bei der Endmontage nur noch der Einsatz 7 mit der gewünschten Form der Einwurföffnung 70 in die Aufnahmeöffnung des Gehäusedeckels 3 eingesetzt und mit den Klettbefestigungsmitteln 8 fixiert werden muss.

## Patentansprüche

1. Abfallsammler (1), umfassend
- ein Gehäuse (2) mit einem Innenraum zur Aufnahme mindestens eines Abfallsacks oder mindestens eines Inneneimers,
- einen Gehäusedeckel (3), der fest oder lösbar an einer Oberseite des Gehäuses (2) angebracht ist und eine Aufnahmeöffnung aufweist, in der ein Einsatz (7) mit mindestens einer Einwurföffnung (70) angeordnet ist,
wobei an einer Innenseite des Gehäusedeckels (3) und an einer Innenseite des Einsatzes (7) Befestigungsmittel angebracht sind, die für eine lösbare Befestigung des Einsatzes (7) an dem Gehäusedeckel (3) eingerichtet sind, **dadurch gekennzeichnet, dass** die Befestigungsmittel als Klettbefestigungsmittel (8) ausgebildet sind.

2. Abfallsammler (1) nach Anspruch 1, **dadurch gekennzeichnet, dass** der Einsatz (7) so geformt ist, dass er mit einem äußeren Rand (72) auf einem an die Aufnahmeöffnung angrenzenden Bereich des Gehäusedeckels (3) aufliegt.

3. Abfallsammler (1) nach einem der Ansprüche 1 oder 2, **dadurch gekennzeichnet, dass** die Einwurföffnung (70) kreisrund ausgebildet ist.

4. Abfallsammler (1) nach Anspruch 3, **dadurch gekennzeichnet, dass** der Einsatz (7) eine sich nach innen verjüngende, kegelstumpfartig geformte Vertiefung (71) aufweist, welche die kreisrunde Einwurföffnung (70) seitlich begrenzt.

5. Abfallsammler (1) nach einem der Ansprüche 1 oder 2, **dadurch gekennzeichnet, dass** die Einwurföffnung (70) schlitz- oder langlochartig ausgebildet ist.

6. Abfallsammler (1) nach einem der Ansprüche 1 bis 5, **dadurch gekennzeichnet, dass** der Gehäusedeckel (3) schwenkbar an dem Gehäuse (2) angelenkt ist.

7. Abfallsammler (1) nach einem der Ansprüche 1 bis 6, **dadurch gekennzeichnet, dass** der Abfallsammler (1) eine Gehäusetür (4) aufweist, die lösbar mit dem Gehäuse (2) verbunden ist.

8. Abfallsammler (1) nach einem der Ansprüche 1 bis 6, **dadurch gekennzeichnet, dass** der Abfallsammler (1) eine Gehäusetür (4) aufweist, die an dem Gehäuse (2) angelenkt ist.

9. Abfallsammler (1) nach einem der Ansprüche 1 bis 8, **dadurch gekennzeichnet, dass** im Innenraum des Gehäuses (2) Mittel zum Halten und Aufspannen des mindestens einen Abfallsacks ausgebildet sind.

## Claims

1. Waste collector (1), comprising
- a housing (2) having an interior for receiving at least one waste sack or at least one inner bin,
- a housing lid (3) which is disposed fixedly or detachably on an upper side of the housing (2) and has a receiving opening in which an insert (7) with at least one throw-in opening (70) is disposed, wherein fastening means are disposed on an inner side of the housing lid (3) and on an inner side of the insert (7) which are configured to detachably fasten the insert (7) on the housing lid (3), **characterised in that** the fastening means are formed as hook and loop fastening means (8).

2. Waste collector (1) according to claim 1, **characterised in that** the insert (7) is formed such that it rests with an outer edge (72) on a region of the housing lid (3) bordering the receiving opening.

3. Waste collector (1) according to any one of claims 1 or 2, **characterised in that** the throw-in opening (70) is circularly formed.

4. Waste collector (1) according to claim 3, **characterised in that** the insert (7) has a depression (71) tapering inwards and formed in the manner of a truncated cone which laterally delimits the circular throw-in opening (70).

5. Waste collector (1) according to any one of claims 1 or 2, **characterised in that** the throw-in opening (70) is formed as a slot or oblong hole.

6. Waste collector (1) according to any one of claims 1 to 5, **characterised in that** the housing lid (3) is pivotably hinged on the housing (2).

7. Waste collector (1) according to any one of claims 1 to 6, **characterised in that** the waste collector (1) has a housing door (4) which is detachably connected to the housing (2).

8. Waste collector (1) according to any one of claims 1 to 6, **characterised in that** the waste collector (1) has a housing door (4) which is hinged on the housing (2).

9. Waste collector (1) according to any one of claims 1 to 8, **characterised in that** means for holding and stretching the at least one waste sack are formed in the interior of the housing (2).

## Revendications

1. Collecteur de déchets (1), comprenant
- un corps (2) pourvu d'un espace intérieur servant à recevoir au moins un sac de déchets ou au moins un seau intérieur,
- un couvercle de corps (3), qui est installé de manière solidaire ou de manière amovible au niveau d'un côté supérieur du corps (2) et qui présente une ouverture de réception, dans laquelle un insert (7) pourvu d'au moins une ouverture d'introduction (70) est agencé,
dans lequel des moyens de fixation sont installés au niveau d'un côté intérieur du couvercle de corps (3) et au niveau d'un côté intérieur de l'insert (7), lesquels moyens de fixation sont mis au point en vue d'une fixation amovible de l'insert (7) au niveau du couvercle de corps (3),
**caractérisé en ce que** les moyens de fixation sont réalisés sous la forme de moyens de fixation scratch (8).

2. Collecteur de déchets (1) selon la revendication 1, **caractérisé en ce que** l'insert (7) est formé de telle sorte qu'il repose par un bord (72) extérieur sur une zone jouxtant l'ouverture de réception du couvercle de corps (3).

3. Collecteur de déchets (1) selon l'une quelconque des revendications 1 ou 2, **caractérisé en ce que** l'ouverture d'introduction (70) est réalisée de manière ronde circulaire.

4. Collecteur de déchets (1) selon la revendication 3, **caractérisé en ce que** l'insert (7) présente un renfoncement (71) se rétrécissant vers l'intérieur, formé à la manière d'un cône tronqué, lequel renfoncement délimite latéralement l'ouverture d'introduction (70) ronde circulaire.

5. Collecteur de déchets (1) selon l'une quelconque des revendications 1 ou 2, **caractérisé en ce que** l'ouverture d'introduction (70) est réalisée à la manière d'une entaille ou d'un trou oblong.

6. Collecteur de déchets (1) selon l'une quelconque des revendications 1 à 5, **caractérisé en ce que** le couvercle de corps (3) est articulé de manière à pouvoir pivoter au niveau du corps (2).

7. Collecteur de déchets (1) selon l'une quelconque des revendications 1 à 6, **caractérisé en ce que** le collecteur de déchets (1) présente une porte de corps (4), qui est reliée de manière amovible au corps (2).

8. Collecteur de déchets (1) selon l'une quelconque des revendications 1 à 6, **caractérisé en ce que** le collecteur de déchets (1) présente une porte de corps (4), qui est articulée au niveau du corps (2).

9. Collecteur de déchets (1) selon l'une quelconque des revendications 1 à 8, **caractérisé en ce que** des moyens servant à maintenir et à tendre l'au moins un sac de déchets sont réalisés dans l'espace intérieur du corps (2).
